# EUROPÄISCHE PATENTSCHRIFT

(11) **EP 0 939 281 B1**
(45) Veröffentlichungstag und Bekanntmachung des Hinweises auf die Patenterteilung: **24.10.2001**
(21) Anmeldenummer: 98103537.1
(22) Anmeldetag: 28.02.1998
(51) Int. Cl.: F24D 3/16

(54) **Verfahren und Vorrichtung zur Herstellung von Deckenstrahlplatten**
Method and apparatus for manufacturing radiating ceiling plates
Procédé et appareil pour fabriquer des plaques rayonnantes de plafond

(43) Veröffentlichungstag der Anmeldung: 01.09.1999
(73) Patentinhaber: Supellex AG, 8500 Frauenfeld (CH)
(72) Erfinder: Bredemann, Rolf, 31275 Lehrte (DE)
(74) Vertreter: Stenger, Watzke & Ring Patentanwälte

(56) Entgegenhaltungen:
- DE-A- 1 946 011
- DE-A- 2 915 532
- US-A- 2 721 731
- US-A- 4 336 643

## Beschreibung

Die Erfindung betrifft ein Verfahren sowie eine Vorrichtung zur Herstellung von Deckenstrahlplatten für Heiz- und/oder Kühldecken aus mindestens einem Strahlblech, das mehrere parallel und im Abstand zueinander und zu den Längsrändem des Strahlbleches verlaufende Rohre für das Heiz- bzw. Kühlmedium umschließt, sowie eine nach dem Verfahren bzw. mit Hilfe der Vorrichtung hergestellte Deckenstrahlplatte.

Deckenstrahlplatten der voranstehend beschriebenen Art sind in verschiedenen Ausführungen bekannt. Sie arbeiten nach dem Strahlungsprinzip gemäß dem Stefan-Boltzmannschen Strahlungsgesetz und können sowohl zur Beheizung als auch zur Kühlung von Räumen eingesetzt werden. Zur Beheizung werden die im Strahlblech angeordneten Rohre mit einem wärmeabgebenden Medium, beispielsweise mit einer Temperatur zwischen 25 und 35° C beaufschlagt; bei einer zu Kühlzwecken verwendeten Deckenstrahlplatte hat das wärmeaufnehmende Medium eine Temperatur zwischen 12 und 20°C.

In der DE-A-29 15 532 wird eine Dachplatte aus Blech zum Auffangen von Sonnenenergie und zur Erwärmung von Wasser sowie eine Vorrichtung zur Herstellung einer derartigen Dachplatte beschrieben. Die in dieser Druckschrift beschriebene Vorrichtung zur Herstellung einer formschlüssigen Verbindung eines Rohres mit einer Dachplatte aus Blech weist dabei zwei einander gegenüberliegende Preßteile mit vorspringenden Kanten auf, die gegeneinander bewegbar sind, um die Wandungen einer Sicke in einer Dachplatte um ein in die Sicke eingelegtes Rohr herumzudrücken. Als einander gegenüberliegende Preßteile werden in dieser Druckschrift beispielhaft einander gegenüberliegende, durch eine Druckfeder auseinander gedrückte Preßbacken vorgeschlagen, welche durch Aufbringen einer Preßkraft mittels eines Druckstempels aufeinander zu bewegt werden und dabei ein in die Sicke eines Blechteils eingelegtes Rohr durch Umbiegen der Sicke formschlüssig verklemmen.

Da die Deckenstrahlplatten hinsichtlich ihrer Abmessungen und Leistungen an den jeweiligen Einsatzzweck angepaßt werden müssen, liegt der Erfindung die **Aufgabe** zugrunde, ein Verfahren und eine Vorrichtung zu schaffen, mit der Deckenstrahlplatten der eingangs beschriebenen Art preisgünstig hergestellt werden können. Außerdem sollen die erfindungsgemäßen Deckenstrahlplatten konstruktiv einfach aufgebaut sein und einen hohen Wirkungsgrad haben.

Das erfindungsgemäße Verfahren zur Herstellung von Deckenstrahlplatten ist dadurch gekennzeichnet, daß das im Ausgangszustand ebene Strahlblech mittels eines Preßwerkzeugs um mindestens ein Rohr bis zur gewünschten Umschlingung des Rohres herumgebogen und jeweils nach Öffnen des Preßwerkzeugs mindestens einmal quer zur Längsrichtung entsprechend dem gewünschten Rohrabstand verschoben und nach Einlegen mindestens eines weiteren Rohres mittels desselben Preßwerkzeugs um dieses weitere Rohr herumgebogen wird.

Mit diesem erfindungsgemäßen Verfahren wird die Möglichkeit geschaffen, ein im Ausgangszustand ebenes Strahlblech auf einfache und preisgünstige Weise mit jeweils der gewünschten Anzahl von Rohren zu versehen, wobei der Abstand der Rohre wählbar ist und das Strahlblech jedes einzelne Rohr entsprechend einem vorgebbaren Umschlingungswinkel umschließt.

Das Strahlblech kann gemäß einem weiteren Merkmal der Erfindung bei jedem Preßvorgang gleichzeitig um mehrere Rohre herumgebogen werden.

Der Abstand zwischen den Rohren eines Strahlbleches kann durch die Größe der Querverschiebung des Strahlbleches und/oder durch die Einstellung des Preßwerkzeuges auf den gewünschten Rohrabstand veränderlich sein, so daß mit dem erfindungsgemäßen Verfahren nicht nur die jeweilige Länge der Deckenstrahlplatte wählbar ist, sondern auch die jeweilige Breite und die Anzahl der im Strahlblech angeordneten Rohre.

Die erfindungsgemäße Vorrichtung zur Herstellung von Deckenstrahlplatten der eingangs beschriebenen Art ist dadurch gekennzeichnet, daß das Preßwerkzeug ein auf einem Pressentisch befestigbares Unterwerkzeug aus einem in Preßrichtung relativ zu einem Basisteil beweglichen Auflageteil und mindestens einem in einer Aussparung des Auflageteils am Basisteil angeordneten Rohrhalteteil sowie ein am Pressenstempel anzuordnendes Oberwerkzeug umfaßt, das mindestens einen das Strahlblech im Bereich eines Rohrhalteteils an das Rohr anpressende Mittelstempel und jeweils zwei seitlich des Mittelstempels angeordnete Zangenstempel umfaßt, die bei einer Absenkung des Oberwerkzeugs auf das Unterwerkzeug das Strahlblech jeweils um das Rohr herumbiegen.

Mit diesem Vorschlag der Erfindung ergibt sich eine Vorrichtung, die aus wenigen und funktionssicheren Teilen besteht und dennoch variabel an die jeweils gewünschten Abmessungen und Ausführungen der Deckenstrahlplatte angepaßt werden kann.

Gemäß einem weiteren Merkmal der Erfindung ist das Auflageteil durch die Zangenstempel entgegen Federkraft relativ zum Basisteil verschiebbar. Der Mittelstempel und die Zangenstempel sind erfindungsgemäß entgegen Federkraft verschiebbar in einem Lagerteil des Oberwerkzeugs angeordnet. Die auf das Auflageteil bzw. den Mittelstempel und die Zangenstempel einwirkende Federkraft wird erfindungsgemäß vorzugsweise durch jeweils mindestens eine Feder erzeugt, kann aber auch pneumatischer oder hydraulischer Art sein.

Bei einer bevorzugten Ausführungsform der Erfindung sind die Zangenstempel winkelförmig ausgebildet und mittels eines Führungsschenkels jeweils in einer unter einem spitzen Winkel zur Bewegungsrichtung des Oberwerkzeugs verlaufenden Schrägführung im Lagerteil geführt sowie an den einander gegenüberliegenden Stirnflächen ihrer parallel zum Auflageteil des Unterwerkzeugs verlaufenden Schenkel mit einer das Strahlblech an den Umfang des jeweiligen Rohres anpressenden Arbeitsfläche versehen. Diese Arbeitsflächen können erfindungsgemäß jeweils an einem auswechselbaren Teil der Zangenstempel ausgebildet sein, so daß sie auf einfache Weise an den Außendurchmesser der jeweils zu verarbeitenden Rohre angepaßt werden können.

Um eine zuverlässige Anpassung des Strahlbleches an die Rohroberfläche zu erzielen, wird mit der Erfindung weiterhin vorgeschlagen, jede Arbeitsfläche mit einer Anschlagfläche zu versehen, die mit einer leistenförmigen Erhebung des Rohrhalteteils zusammenwirkt, so daß sich eine formschlüssige Endstellung der das Strahlblech um die Rohre herumbiegenden Teile ergibt.

Gemäß einem weiteren Merkmal der Erfindung ist das Preßwerkzeug mit einer das Strahlblech in Querrichtung auf dem Auflageteil des Unterwerkzeugs entsprechend dem gewünschten Rohrabstand schrittweise transportierenden Vorschubeinrichtung versehen. Diese Vorschubeinrichtung kann in geeigneter Weise ausgeführt sein. Weiterhin wird vorgeschlagen, das Preßwerkzeug mit einer die Rohre in Längsrichtung in die Aussparungen des Auflageteils transportierenden Zuführeinrichtung zu versehen, die ebenfalls in geeigneter Weise ausgeführt sein kann.

Die nach dem erfindungsgemäßen Verfahren hergestellte Deckenstrahlplatte besteht vorzugsweise aus einem Strahlblech aus Aluminium und Rohren aus Kupfer. Das Strahlblech ist vorzugsweise perforiert.

Um eine einfache Aufhängung der Deckenstrahlplatte zu ermöglichen, wird mit der Erfindung weiterhin vorgeschlagen, das Strahlblech mit quer zu den Rohren zwischen seitlichen Aufkantungen verlaufenden Versteifungsprofilen zu versehen, über die die Aufhängung der Deckenstrahlplatte erfolgt. Um eine unerwünschte Wärme- bzw. Kältestrahlung nach oben zu verhindern, wird mit der Erfindung schließlich vorgeschlagen, die Deckenstrahlplatte auf ihrer Oberseite mit einer Isoliermatte zu versehen.

Auf der Zeichnung sind drei Ausführungsbeispiele einer erfindungsgemäßen Deckenstrahlplatte sowie ein Ausführungsbeispiel einer erfindunsgemäßen Vorrichtung zur Herstellung derartiger Deckenstrahlplatten dargestellt, wobei anhand dieser Zeichnungen auch das erfindungsgemäße Verfahren erläutert werden wird. Auf der Zeichnung zeigt:
- Fig. 1: einen Querschnitt durch ein erstes Ausführungsbeispiel einer Deckenstrahlplatte,
- Fig. 2: einen entsprechenden Querschnitt durch ein zweites Ausführungsbeispiel einer Deckenstrahlplatte,
- Fig. 3: einen Querschnitt durch ein drittes Ausführungsbeispiel,
- Fig. 4: eine vergrößerte Schnittdarstellung durch eine Einzelheit gemäß der Einkreisung IV in Fig. 1,
- Fig. 5: eine schematische Darstellung einer Vorrichtung zur Herstellung der Deckenstrahlplatten nach den Fig. 1 bis 3 mit in der Ausgangsstellung befindlichem Preßwerkzeug,
- Fig. 6: eine der Fig. 5 entsprechende Darstellung nach erfolgter Materialzufuhr,
- Fig. 7: eine weitere Darstellung des Preßwerkzeugs bei abgesenktem Pressenstempel,
- Fig. 8: eine entsprechende Darstellung des Preßwerkzeuges am Ende des ersten Preßvorganges,
- Fig. 9: das Preßwerkzeug gemäß den Fig. 5 bis 8 nach Rückkehr in die Ausgangsstellung,
- Fig. 10: das Preßwerkzeug nach einer seitlichen Werkstückverlagerung und Zufuhr eines weiteren Rohres,
- Fig. 11: eine weitere Darstellung des Preßwerkzeuges nach erneutem Absenken des Pressenstempels,
- Fig. 12: das Preßwerkzeug am Ende des zweiten Preßvorganges und
- Fig. 13: eine Darstellung des Preßwerkzeuges nach erneuter Rückkehr in die Ausgangsstellung.

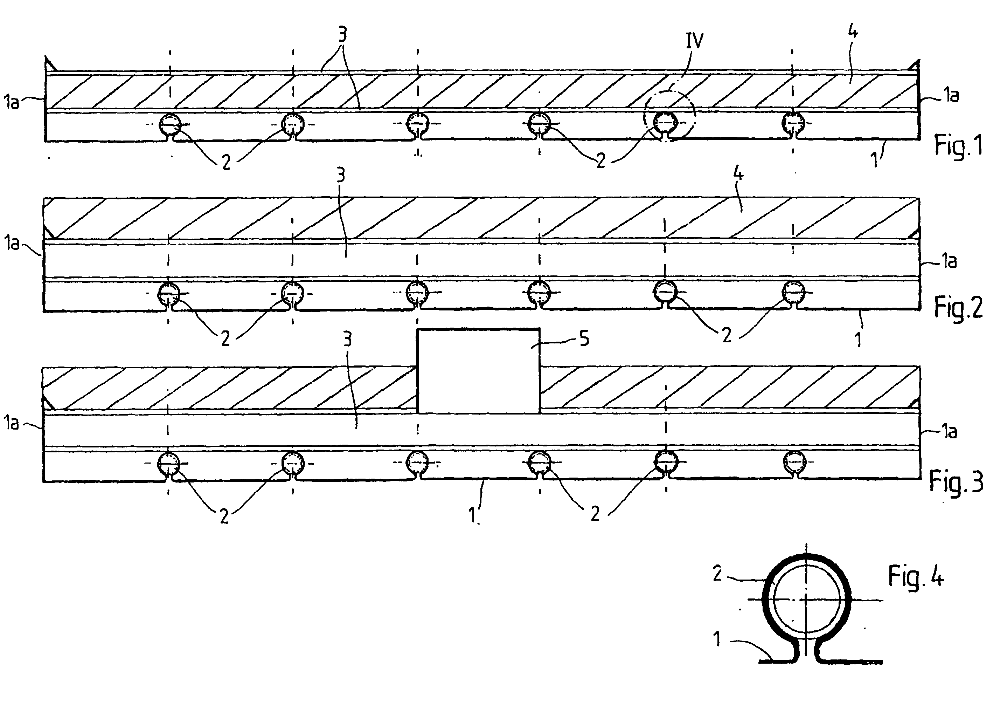

Die in den Fig. 1 bis 3 dargestellten Deckenstrahlplatten werden als Heiz-und/oder Kühldecken verwendet und bestehen jeweils aus einem Strahlblech 1, vorzugsweise aus Aluminium, das an seinen Längsrändern mit Aufkantungen 1a versehen ist. In das Strahlblech 1 sind mehrere vorzugsweise aus Kupfer bestehende Rohre 2 eingebettet. Fig. 4 zeigt, daß bei den dargestellten Ausführungsbeispielen das Strahlblech 1 das jeweilige Rohr 2 auf einem Umschlingungswinkel von etwa 340° umgibt, so daß eine gute Wärmeleitung zwischen den Rohren 2 und dem Strahlblech 1 erzielt wird.

Bei allen Ausführungsbeispielen sind oberhalb der Rohre 2 quer zu diesen verlaufende Versteifungsprofile 3 zwischen den Aufkantungen 1a angeordnet, die zugleich der Aufhängung der Deckenstrahlplatte dienen. Während beim ersten Ausführungsbeispiel nach Fig. 1 zwischen den Versteifungsprofilen 3 Isoliermatten 4 angeordnet sind, zeigt das Ausführungsbeispiel nach Fig. 2 eine oberhalb der Versteifungsprofile 3 auf der Oberseite der Deckenstrahlplatte durchgehend angeordnete Isoliermatte 4. Das dritte Ausführungsbeispiel nach Fig. 3 zeigt, daß bei Verwendung eines perforierten Strahlbleches 1 die Deckenstrahlplatte zusätzlich mit einem Zuluftanschluß 5 versehen sein kann.

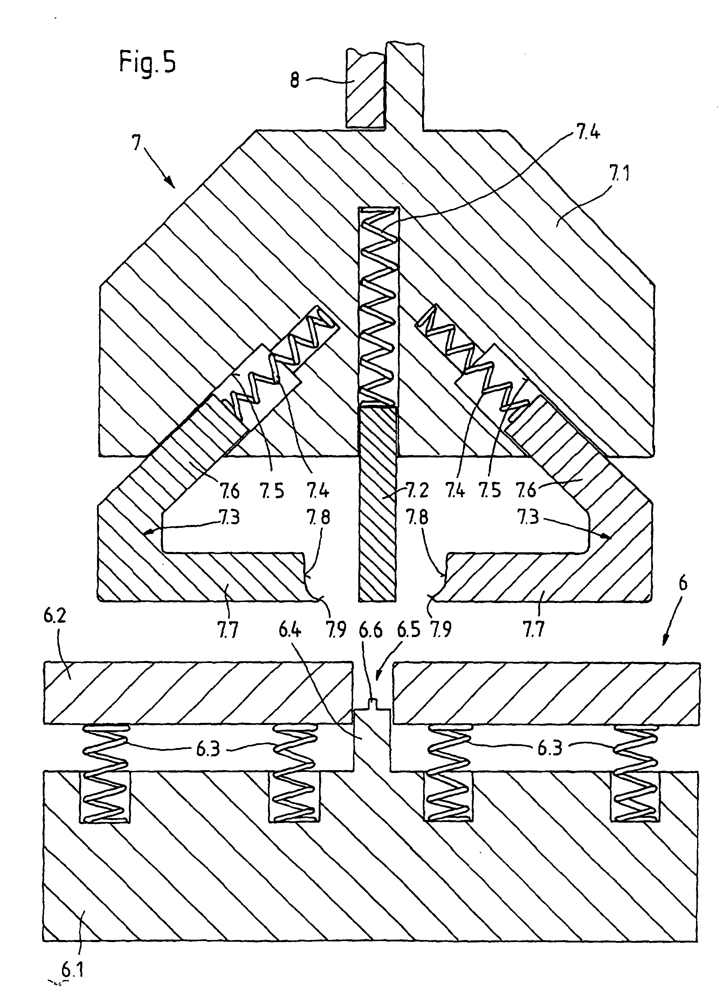

Das in den Fig. 5 bis 13 schematisch dargestellte Preßwerkzeug zur Herstellung von Deckenstrahlplatten nach den Fig. 1 bis 3 umfaßt ein auf einem nicht dargestellten Pressentisch einer Presse befestigbares Unterwerkzeug 6 sowie ein am Pressenstempel zu befestigendes Oberwerkzeug 7.

Das Unterwerkzeug 6 besteht aus einem unmittelbar am nicht dargestellten Pressentisch zu befestigenden Basisteil 6.1 und einem Auflageteil 6.2, das in Bewegungsrichtung des Pressenstempels relativ zum Basisteil 6.1 entgegen Federkraft beweglich ist. Beim Ausführungsbeispiel wird diese Federkraft durch wendelförmige Druckfedern 6.3 erzeugt. Auf der Oberfläche des Basisteils 6.1 ist ein Rohrhalteteil 6.4 ausgebildet, das in eine Aussparung 6.5 des Auflageteils 6.2 hineinragt. Auf der Oberseite dieses Rohrhalteteils 6.4 ist eine leistenförmige Erhebung 6.6 ausgebildet.

Das Oberwerkzeug 7 umfaßt ein am angedeuteten Pressenstempel 8 zu befestigendes Lagerteil 7.1, in dem ein Mittelstempel 7.2 und zwei Zangenstempel 7.3 wiederum gegen Federkraft verschiebbar geführt sind. Auch bezüglich des Oberwerkzeugs 7 wird die Federkraft jeweils durch wendelförmige Druckfedern 7.4 erzeugt.

Während der Mittelstempel 7.2 oberhalb des Rohrhalteteils 6.4 des Unterwerkzeugs 6 in Bewegungsrichtung des Pressenstempels 8 verschiebbar im Lagerteil 7.1 geführt ist, erfolgt die Führung der Zangenstempel 7.3 durch Schrägführungen 7.5, die unter einem spitzen Winkel zur Bewegungsrichtung des Oberwerkzeugs 7 verlaufen. Jeder Zangenstempel 7.3 ist winkelförmig aus einem in der jeweiligen Schrägführung 7.5 geführten Führungsschenkel 7.6 und einem Schenkel 7.7 ausgeführt, der sich parallel zur Oberfläche des Auflageteils 6.2 des Unterwerkzeugs 6 erstreckt. Jeder Schenkel 7.7 ist an seiner dem jeweils anderen Schenkel 7.7 zugewandten Stirnfläche mit einer Arbeitsfläche 7.8 ausgeführt, die der Außenkontur des an die Oberfläche eines Rohres 2 anzupressenden Strahlbleches 1 entspricht. An der Unterseite der Arbeitsfläche 7.8 befindet sich eine Anschlagfläche 7.9, die zur Anlage an der leistenförmigen Erhebung 6.6 gelangt, wenn sich die Zangenstempel 7.3 in ihrer Endposition während des Preßvorganges befinden.

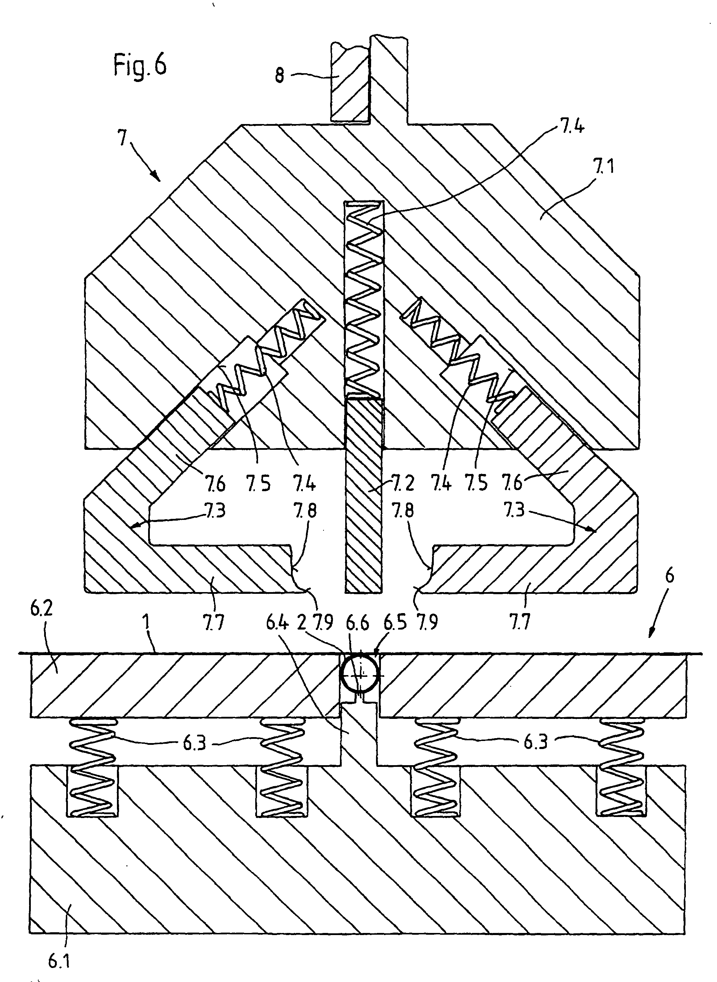

Während die Fig. 5 im Querschnitt das in der Ausgangsstellung befindliche Preßwerkzeug zeigt, ist in Fig. 6 eine Situation gezeigt, in der sowohl ein Rohr 2 in die Aussparung 6.5 des Unterwerkzeuges 6 eingeführt als auch ein im Ausgangszustand ebenes Strahlblech 1 von der Seite her auf die Oberseite des Auflageteils 6.2 abgelegt worden ist. Die Zufuhr dieses Strahlbleches 1a erfolgt mittels einer auf der Zeichnung nicht dargestellten Vorschubeinrichtung quer zur Längsrichtung des Preßwerkzeuges. Diese Vorschubeinrichtung dient weiterhin dazu, das Strahlblech 1 entsprechend dem gewünschten Abstand der Rohre 2 schrittweise auf dem Auflageteil 6.2 zu transportieren. Die Zufuhr der Rohre 2 auf das in der Aussparung 6.5 des Auflageteils 6.2 befindliche Rohrhalteteil 6.4 erfolgt dagegen in Längsrichtung des Preßwerkzeuges mittels einer auf der Zeichnung ebenfalls nicht dargestellten Zuführeinrichtung.

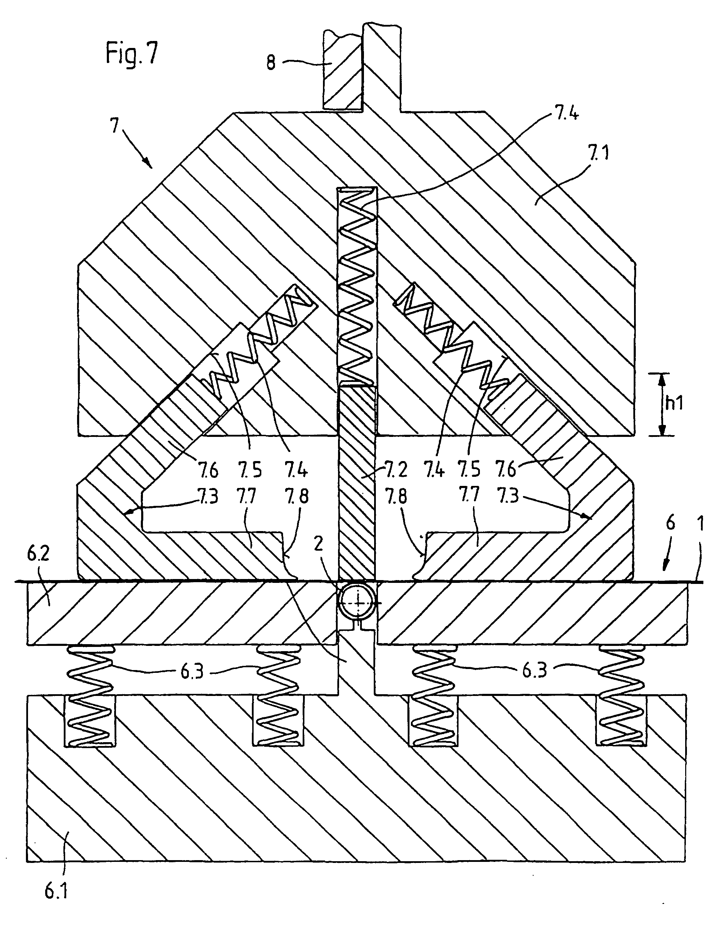

Während die Fig. 6 die Ausgangsstellung des Preßwerkzeuges mit zugeführtem Strahlblech 1 und Rohr 2 zeigt, ist in Fig. 7 eine Stellung des Preßwerkzeuges gezeigt, in der der mit dem Oberwerkzeug 7 versehene Pressenstempel 8 nach Ausführung eines ersten Hubes h1 soweit abgesenkt worden ist, daß die Schenkel 7.7 des Oberwerkzeuges 7 auf dem auf dem Auflageteil 6.2 befindlichen Strahlblech 1 aufliegen und der Mittelstempel 7.2 oberhalb des Rohres 2 am Strahlblech 1 anliegt. Das Auflageteil 6.2 befindet sich jedoch noch in seinem Ausgangszustand und nimmt den maximal möglichen Abstand vom Basisteil 6.1 ein.

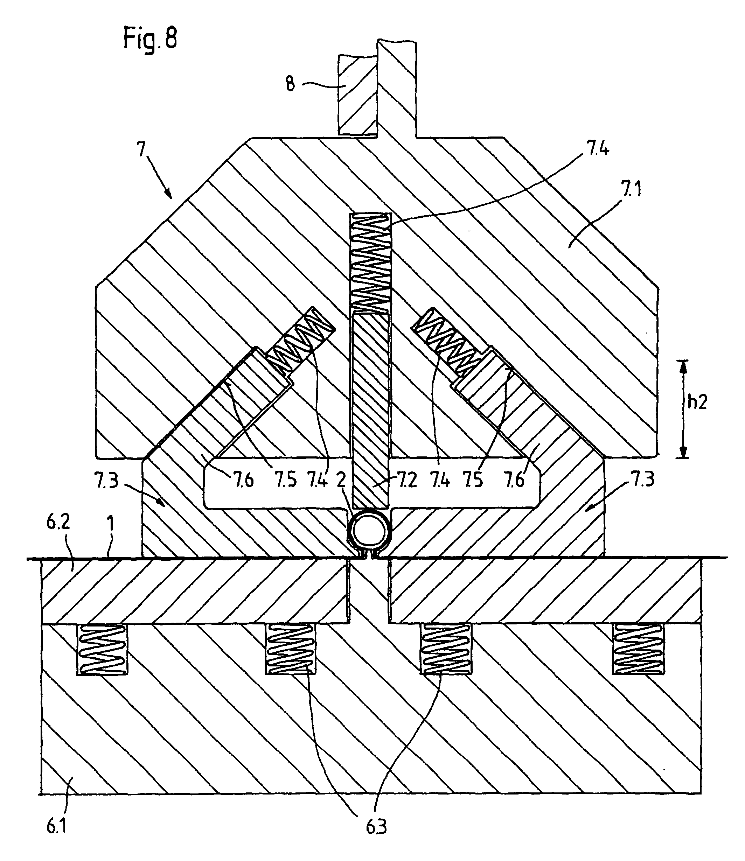

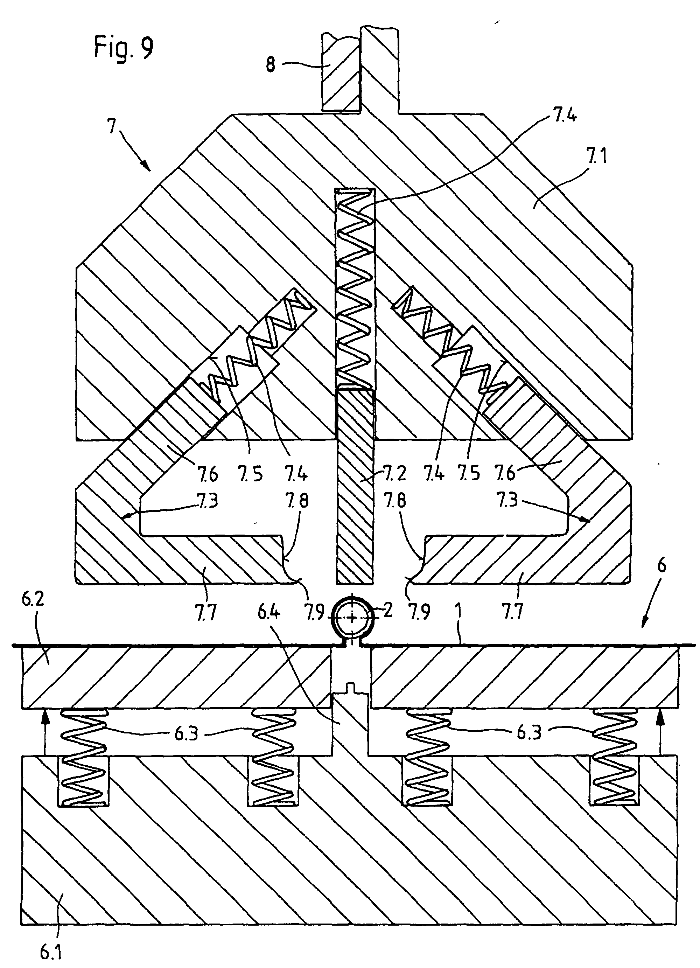

In Fig. 8 ist nunmehr eine Stellung des Preßwerkzeuges gezeichnet, bei der das Oberwerkzeug 7 einen zweiten Hub h2 ausgeführt hat. Während dieser Bewegung wurde mittels der Schenkel 7.7 das Auflageteil 6.2 des Unterwerkzeugs 6 entgegen der Kraft der Druckfedern 6.3 in seine unterste Stellung gedrückt, in der seine Unterseite auf der Oberseite des Basisteils 6.1 aufliegt. Bei Ausführung dieses Hubes h2 erhöhte sich die Kraft der Druckfeder 7.4 auf den Mittelstempel 7.2, so daß dieser das Strahlblech 1 mit der erforderlichen Haltekraft an das Rohr 2 andrückt. Gleichzeitig führten die Zangenstempel 7.3 aufgrund ihrer in den Schrägführungen 7.5 geführten Führungsschenkel 7.6 entgegen der Kraft ihrer Druckfedern 7.4 zusätzlich zur Absenkbewegung eine auf das Rohr 2 gerichtete seitliche Bewegung aus, so daß ihre Arbeitsflächen 7.8 das Strahlblech 1 an den Umfang des Rohres 2 anpreßten, wie in den Fig. 8 und 9 zu erkennen ist. Im Endzustand lagen die Anschlagflächen 7.9 der Schenkel 7.7 an der leistenförmigen Erhebung 6.6 des Rohrhalteteils 6.4 an, so daß sich eine formschlüssige Endstellung ergab.

In Fig. 9 ist eine Situation gezeichnet, in der das Oberwerkzeug 7 mit dem Pressenstempel 8 in die Ausgangsstellung zurückgekehrt ist. In dieser Darstellung ist das vom Strahlblech 1 umgebene Rohr 2 gut zu erkennen. Die Fig. 9 zeigt weiterhin, daß auch das Auflageteil 6.2 aufgrund der Kraft der Druckfedern 6.3 in seine Ausgangsstellung zurückgekehrt ist.

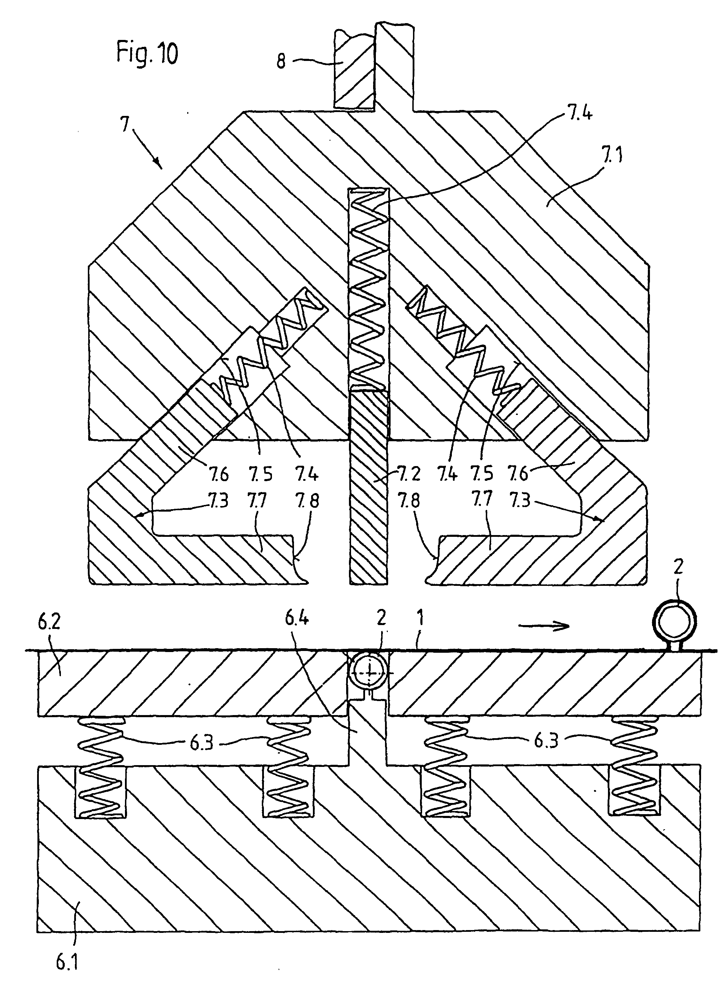

Gemäß Fig. 10 erfolgt nunmehr eine seitliche Verlagerung des mit dem eingepreßten Rohr 2 versehenen Strahlbleches 1 um den Betrag des jeweils gewünschten Rohrabstandes. Nach Einführen eines weiteren Rohres 2 in die Aussparung 6.5 des Auflageteils 6.2 steht das Preßwerkzeug für den nächsten Arbeitsgang bereit.

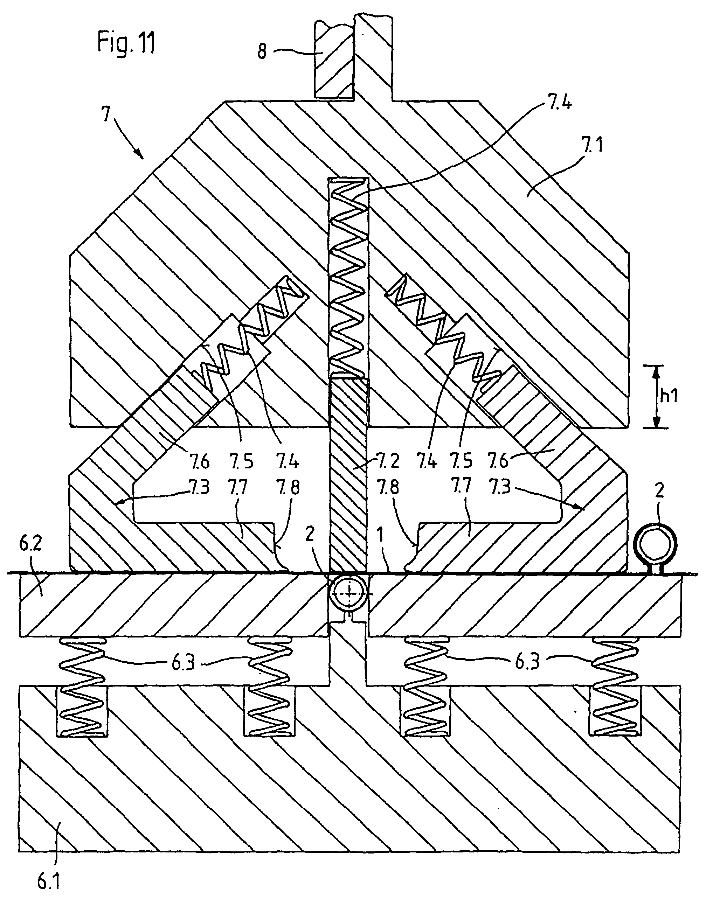

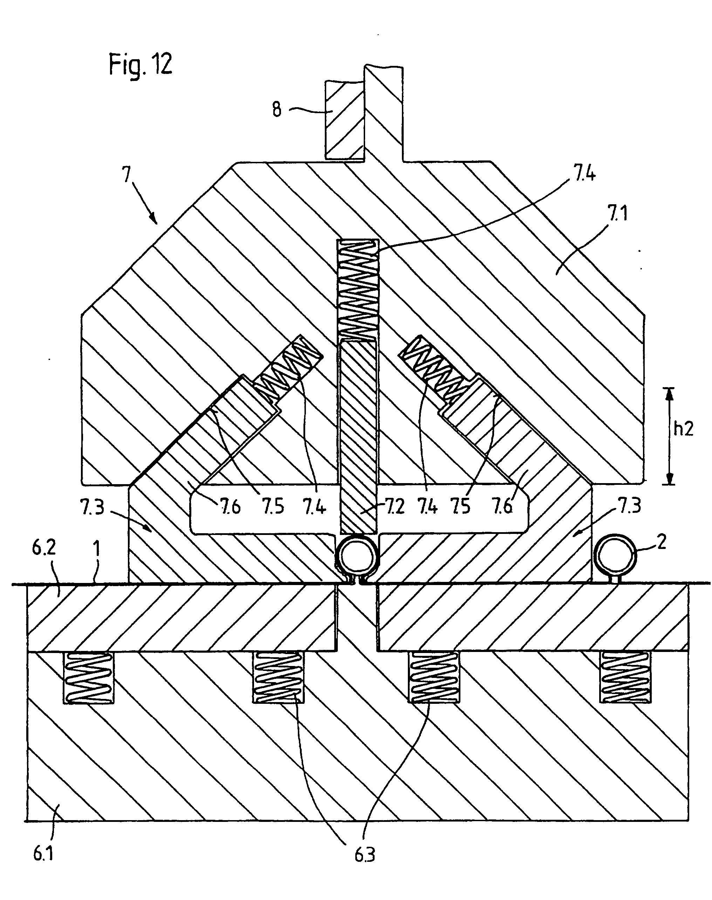

Auch dieser nächste Preßvorgang wird in den Fig. 11 und 12 durch zwei aufeinanderfolgende Schritte dargestellt. In Fig. 11 ist ein erneutes Absenken des mit dem Oberwerkzeug 7 versehenen Pressenstempels 8 gezeigt; die Fig. 12 zeigt die Situation am Ende des zweiten Preßvorganges, nach dessen Ausführung ein zweites Rohr 2 vom Strahlblech 1 umgriffen wird.

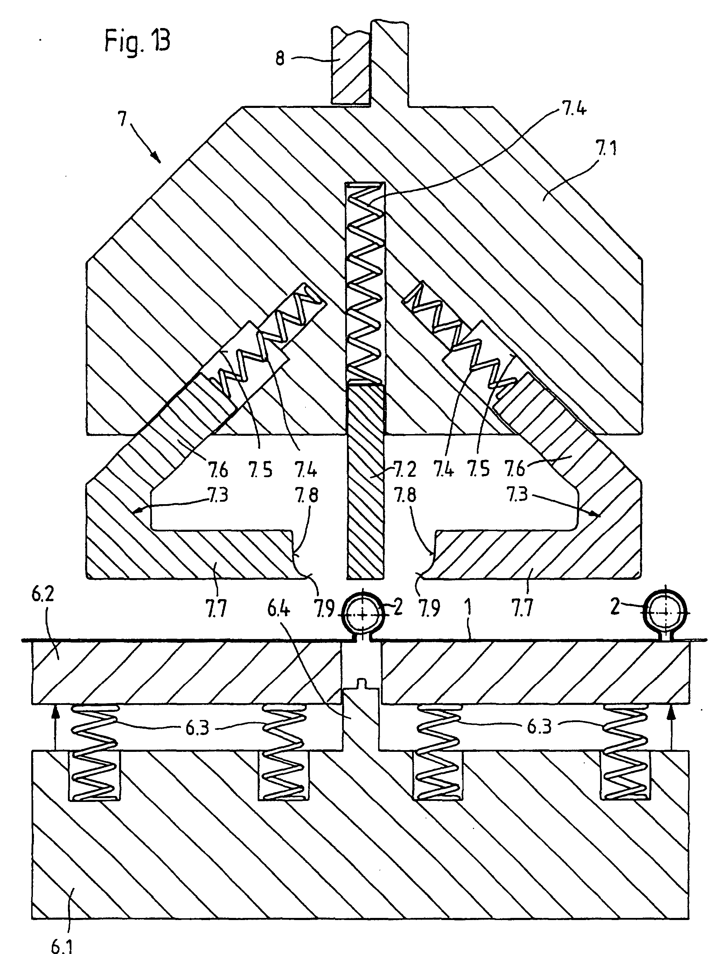

Nach erneuter Rückkehr des mit dem Oberwerkzeug 7 verbundenen Pressenstempels 8 in die Ausgangsstellung gemäß Fig. 13 und einem erneuten seitlichen Verschieben des Strahlbleches 1 werden anschließend die nächsten Preßvorgänge durchgeführt, so daß das Strahlblech 1 entsprechend seiner Breite mit der jeweils gewünschten Anzahl von Rohren 2 versehen werden kann.

### Bezugszeichenliste

- 1: Strahlblech
- 1a: Aufkantung
- 2: Rohr
- 3: Versteifungsprofil
- 4: Isoliermatte
- 5: Zuluftanschluß
- 6: Unterwerkzeug
- 6.1: Basisteil
- 6.2: Auflageteil
- 6.3: Druckfeder
- 6.4: Rohrhalteteil
- 6.5: Aussparung
- 6.6: Erhebung
- 7: Oberwerkzeug
- 7.1: Lagerteil
- 7.2: Mittelstempel
- 7.3: Zangenstempel
- 7.4: Druckfeder
- 7.5: Schrägführung
- 7.6: Führungsschenkel
- 7.7: Schenkel
- 7.8: Arbeitsfläche
- 7.9: Anschlagfläche
- 8: Pressenstempel
- h1: Hub
- h2: Hub

## Patentansprüche

1. Verfahren zur Herstellung von Deckenstrahlplatten für Heiz- und/oder Kühldecken aus mindestens einem Strahlblech (1), das mehrere parallel und im Abstand zueinander und zu den Längsrändern des Strahlbleches (1) verlaufende Rohre (2) für das Heiz- bzw. Kühlmedium umschließt,
**dadurch gekennzeichnet,**
**daß** das im Ausgangszustand ebene Strahlblech (1) mittels eines Preßwerkzeugs um mindestens ein Rohr (2) bis zur gewünschten Umschlingung des Rohres (2) herumgebogen und jeweils nach Öffnen des Preßwerkzeugs mindestens einmal quer zur Längsrichtung entsprechend dem gewünschten Rohrabstand verschoben und durch Einlegen mindestens eines weiteren Rohres (2) mittels desselben Preßwerkzeugs um dieses weitere Rohr (2) herumgebogen wird.

2. Verfahren nach Anspruch 1, **dadurch gekennzeichnet, daß** das Strahlblech (1) bei jedem Preßvorgang um mehrere Rohre (2) herumgebogen wird.

3. Verfahren nach Anspruch 1 oder 2, **dadurch gekennzeichnet, daß** der Abstand zwischen den Rohren (2) durch die Größe der Querverschiebung des Strahlbleches (1) und/oder die Einstellung des Preßwerkzeugs auf den gewünschten Rohrabstand veränderlich ist.

4. Vorrichtung zur Herstellung von Deckenstrahlplatten für Heiz- und/oder Kühldecken aus mindestens einem Strahlblech (1), das mehrere parallel und im Abstand zueinander und zu den Längsrändern des Strahlbleches (1) verlaufende Rohre (2) für das Heiz- bzw. Kühlmedium umschließt, **dadurch gekennzeichnet, daß** das Preßwerkzeug ein auf einem Pressentisch befestigbares Unterwerkzeug (6) aus einem in Preßrichtung relativ zu einem Basisteil (6.1) beweglichen Auflageteil (6.2) und mindestens einem in einer Aussparung (6.5) des Auflageteils (6.2) am Basisteil (6.1) angeordneten Rohrhalteteil (6.4) sowie ein am Pressenstempel (8) anzuordnendes Oberwerkzeug (7) umfaßt, das mindestens einen das Strahlblech (1) im Bereich eines Rohrhalteteils (6.4) an das Rohr (2) anpressenden Mittelstempel (7.2) und jeweils zwei seitlich des Mittelstempels (7.2) angeordnete Zangenstempel (7.3) umfaßt, die bei einer Absenkung des Oberwerkzeugs (7) auf das Unterwerkzeug (6) das Strahlblech (1) jeweils um das Rohr (2) herumbiegen.

5. Vorrichtung nach Anspruch 4, **dadurch gekennzeichnet, daß** das Auflageteil (6.2) durch die Zangenschenkel (7.3) entgegen Federkraft relativ zum Basisteil (6.1) verschiebbar ist.

6. Vorrichtung nach Anspruch 4, **dadurch gekennzeichnet, daß** der Mittelstempel (7.2) und die Zangenstempel (7.3) entgegen Federkraft verschiebbar in einem Lagerteil (7.1) des Oberwerkzeugs (7) angeordnet sind.

7. Vorrichtung nach Anspruch 5 oder 6, **dadurch gekennzeichnet, daß** die Federkraft jeweils durch mindestens eine Feder (6.3) bzw. (7.4) erzeugt wird.

8. Vorrichtung nach mindestens einem der Ansprüche 4 bis 7, **dadurch gekennzeichnet, daß** die Zangenstempel (7.3) winkelförmig ausgebildet und mittels eines Führungsschenkels (7.6) jeweils in einer unter einem spitzen Winkel zur Bewegungsrichtung des Oberwerkzeugs (7) verlaufenden Schrägführung (7.5) im Lagerteil (7.1) geführt sowie an den einander gegenüberliegenden Stirnflächen ihrer parallel zum Auflageteil (6.2) des Unterwerkzeugs (6) verlaufenden Schenkel (7.7) mit einer das Strahlblech (1) an den Umfang des jeweiligen Rohres (2) anpressenden Arbeitsfläche (7.8) versehen sind.

9. Vorrichtung nach mindestens einem der Ansprüche 4 bis 8, **dadurch gekennzeichnet, daß** die Arbeitsflächen (7.8) jeweils an einem auswechselbaren Teil der Zangenstempel (7.3) ausgebildet sind.

10. Vorrichtung nach mindestens einem der Ansprüche 4 bis 9, **dadurch gekennzeichnet, daß** jede Arbeitsfläche (7.8) mit einer Anschlagfläche (7.9) versehen ist, die mit einer leistenförmigen Erhebung (6.6) des Rohrhalteteils (6.4) zusammenwirkt.

11. Vorrichtung nach mindestens einem der Ansprüche 4 bis 10, **dadurch gekennzeichnet, daß** das Preßwerkzeug mit einer das Strahlblech (1) in Querrichtung auf dem Auflageteil (6.2) des Unterwerkzeugs (6) entsprechend dem gewünschten Rohrabstand schrittweise transportierenden Vorschubeinrichtung versehen ist.

12. Vorrichtung nach mindestens einem der Ansprüche 4 bis 11, **dadurch gekennzeichnet, daß** das Preßwerkzeug mit einer die Rohre (2) in Längsrichtung in die Aussparung (6.5) des Auflageteils (6.2) transportierenden Zuführeinrichtung versehen ist.

13. Verfahren nach einem der Ansprüche 1 bis 3, **dadurch gekennzeichnet, daß** das Strahlblech (1) und die Rohre (2) aus metallischen Werkstoffen oder Kunststoffen bestehen.

14. Verfahren nach Anspruch 13, **dadurch gekennzeichnet, daß** das Strahlblech (1) aus Aluminium und die Rohre (2) aus Kupfer bestehen.

15. Verfahren nach Anspruch 13 oder Anspruch 14, **dadurch gekennzeichnet, daß** das Strahlblech (1) perforiert ist.

16. Verfahren nach einem der Ansprüche 13 bis 15, **dadurch gekennzeichnet, daß** das Strahlblech (1) mit quer zu den Rohren (2) zwischen seitlichen Aufkantungen (1a) verlaufenden Versteifungsprofilen (3) versehen wird.

17. Verfahren nach einem der Ansprüche 13 bis 16, **dadurch gekennzeichnet, daß** die Deckenstrahlplatte auf der Oberseite mit einer Isoliermatte (4) versehen wird.

## Claims

1. Method of producing radiant ceiling panels for heating and/or cooling ceilings from at least one radiant plate (1) which encloses a plurality of tubes (2) for the heating or cooling medium which run parallel to and at a distance from one another and from the longitudinal margins of the radiant plate (1), **characterized in that** the radiant plate (1), which is flat in the initial state, is bent around at least one tube (2) by means of a pressing tool until the tube (2) is wrapped as desired and, in each case after the pressing tool is opened, is displaced at least once transversely to the longitudinal direction in accordance with the desired tube spacing and, by insertion of at least one further tube (2), is bent by means of the same pressing tool around this further tube (2).

2. Method according to Claim 1, **characterized in that** the radiant plate (1) is bent around a plurality of tubes (2) during each pressing operation.

3. Method according to Claim 1 or 2, **characterized in that** the distance between the tubes (2) can be adjusted to the desired tube spacing by the size of the transverse displacement of the radiant plate (1) and/or by the setting of the pressing tool.

4. Apparatus for producing radiant ceiling panels for heating and/or cooling ceilings from at least one radiant plate (1) which encloses a plurality of tubes (2) for the heating or cooling medium which run parallel to and at a distance from one another and from the longitudinal margins of the radiant plate (1), **characterized in that** the pressing tool comprises a bottom tool (6), which can be fastened to a press table and consists of a supporting part (6.2) movable in the pressing direction relative to a base part (6.1) and at least one tube-retaining part (6.4) arranged on the base part (6.1) in an aperture (6.5) of the supporting part (6.2), and a top tool (7) which is to be arranged on the press plunger (8) and comprises at least one centre plunger (7.2), pressing the radiant plate (1) against the tube (2) in the region of a tube-retaining part (6.4), and in each case two pincer-type plungers (7.3) which are arranged at the side of the centre plunger (7.2) and in each case bend the radiant plate (1) around the tube (2) when the top tool (7) is lowered onto the bottom tool (6).

5. Apparatus according to Claim 4, **characterized in that** the supporting part (6.2) can be displaced by the pincer legs (7.3) relative to the base part (6.1) against spring force.

6. Apparatus according to Claim 4, **characterized in that** the centre plunger (7.2) and the pincer-type plungers (7.3) are arranged in a bearing part (7.1) of the top tool (7) in such a way that they can be displaced against spring force.

7. Apparatus according to Claim 5 or 6, **characterized in that** the spring force is produced in each case by at least one spring (6.3) or (7.4), respectively.

8. Apparatus according to at least one of Claims 4 to 7, **characterized in that** the pincer-type plungers (7.3) are of angular design and are guided in the bearing part (7.1) by means of a guide leg (7.6) in each case in an inclined guide (7.5) running at an acute angle to the direction of movement of the top tool (7) and, at the end faces, opposite one another, of their legs (7.7) running parallel to the supporting part (6.2) of the bottom tool (6), are provided with a working surface (7.8) pressing the radiant plate (1) against the circumference of the respective tube (2).

9. Apparatus according to at least one of Claims 4 to 8, **characterized in that** the working surfaces (7.8) are in each case formed on an interchangeable part of the pincer-type plungers (7.3).

10. Apparatus according to at least one of Claims 4 to 9, **characterized in that** each working surface (7.8) is provided with a stop surface (7.9) which interacts with a strip-shaped prominence (6.6) of the tube-retaining part (6.4).

11. Apparatus according to at least one of Claims 4 to 10, **characterized in that** the pressing tool is provided with a feed device which successively transports the radiant plate (1) in the transverse direction on the supporting part (6.2) of the bottom tool (6) in accordance with the desired tube spacing.

12. Apparatus according to at least one of Claims 4 to 11, **characterized in that** the pressing tool is provided with a feeding device which transports the tubes (2) in the longitudinal direction into the aperture (6.5) of the supporting part (6.2).

13. Method according to one of Claims 1 to 3, **characterized in that** the radiant plate (1) and the tubes (2) are made of metallic materials or plastics.

14. Method according to Claim 13, **characterized in that** the radiant plate (1) is made of aluminium and the tubes (2) are made of copper.

15. Method according to Claim 13 or Claim 14, **characterized in that** the radiant plate (1) is perforated.

16. Method according to one of Claims 13 to 15, **characterized in that** the radiant plate (1) is provided with reinforcing profiles (3) running transversely to the tubes (2) between lateral raised edges (1a).

17. Method according to one of Claims 13 to 16, **characterized in that** the radiant ceiling panel is provided with an insulating mat (4) on the top side.

## Revendications

1. Procédé pour la fabrication de plaques rayonnantes de plafond pour des plafonds de chauffage et/ou de refroidissement à partir d'au moins une tôle de rayonnement (1) qui entoure plusieurs tuyaux (2) s'étendant parallèlement les uns aux autres, à une certaine distance les uns des autres et des bords longitudinaux de la tôle de rayonnement (1) et destinés au fluide de chauffage ou de refroidissement,
**caractérisé en ce que** la tôle de rayonnement (1) plane à l'état de départ est repliée au moyen d'un outil de presse autour d'au moins un tuyau (2) jusqu'à entourer le tuyau (2) de la manière souhaitée, **en ce qu'**elle est déplacée à chaque fois après l'ouverture de l'outil de presse au moins une fois transversalement à la direction longitudinale selon la distance souhaitée entre tuyaux et **en ce qu'**elle est repliée après la pose d'au moins un autre tuyau (2) au moyen du même outil de presse autour de cet autre tuyau (2).

2. Procédé selon la revendication 1, **caractérisé en ce que** la tôle de rayonnement (1) est repliée à chaque opération de presse autour de plusieurs tuyaux (2).

3. Procédé selon la revendication 1 ou 2, **caractérisé en ce que** la distance entre les tuyaux (2) peut être modifiée par la grandeur du déplacement transversal de la tôle de rayonnement (1) et/ou par le réglage de l'outil de presse sur la distance souhaitée entre tuyaux.

4. Dispositif pour la fabrication de plaques rayonnantes de plafond pour des plafonds de chauffage et/ou de refroidissement à partir d'au moins une tôle de rayonnement (1) qui entoure plusieurs tuyaux (2) s'étendant parallèlement les uns aux autres, à une certaine distance les uns des autres et des bords longitudinaux de la tôle de rayonnement (1) et destinés au fluide de chauffage ou de refroidissement, **caractérisé en ce que** l'outil de presse comprend un outil inférieur (6) pouvant être fixé au plateau et composé d'une pièce d'appui (6.2) mobile par rapport à une pièce de base (6.1) et d'au moins une pièce de blocage de tuyau (6.4) disposée dans un évidement (6.5) de la pièce d'appui (6.2) sur la pièce de base (6.1) ainsi qu'un outil supérieur (7) qui est à monter sur l'estampe de presse (8) et qui comprend au moins une estampe médiane (7.2) pressant la tôle de rayonnement (1) dans la zone d'une pièce de blocage de tuyau (6.4) contre le tuyau (2) et à chaque fois deux estampes de pince (7.3) montées à côté de l'estampe médiane (7.2), lesquelles replient à chaque fois la tôle de rayonnement (1) autour du tuyau (2) lors d'un abaissement de l'outil supérieur (7) sur l'outil inférieur (6).

5. Dispositif selon la revendication 4, **caractérisé en ce que** la pièce d'appui (6.2) peut être déplacée par les estampes de pince (7.3), à l'encontre d'une force élastique, par rapport à la pièce de base (6.1).

6. Dispositif selon la revendication 4, **caractérisé en ce que** l'estampe médiane (7.2) et les estampes de pince (7.3) sont disposées dans une pièce de support (7.1) de l'outil supérieur (7) de manière à pouvoir être déplacées à l'encontre d'une force élastique.

7. Dispositif selon la revendication 5 ou 6, **caractérisé en ce que** la force élastique est produite à chaque fois par au moins un ressort (6.3) ou (7.4).

8. Dispositif selon au moins l'une des revendications 4 à 7, **caractérisé en ce que** les estampes de pince (7.3) sont conçues angulaires, **en ce qu'**elles sont guidées dans la pièce de support (7.1) au moyen d'un côté de guidage (7.6) à chaque fois dans un guide oblique (7.5) s'étendant avec un angle aigu par rapport à la direction de déplacement de l'outil supérieur (7) et **en ce que** les surfaces frontales, qui se font face, de leurs côtés (7.7) s'étendant parallèlement à la pièce d'appui (6.2) de l'outil inférieur (6) sont munies d'une surface de travail (7.8) pressant la tôle de rayonnement (1) sur la circonférence du tuyau respectif (2).

9. Dispositif selon au moins l'une des revendications 4 à 8, **caractérisé en ce que** les surfaces de travail (7.8) sont conçues à chaque fois sur une pièce échangeable des estampes de pince (7.3).

10. Dispositif selon au moins l'une des revendications 4 à 9, **caractérisé en ce que** chaque surface de travail (7.8) est munie d'une surface de butée (7.9) qui coopère avec une bosse en forme de baguette (6.6) de la pièce de blocage de tuyau (6.4).

11. Dispositif selon au moins l'une des revendications 4 à 10, **caractérisé en ce que** l'outil de presse est muni d'un dispositif d'avance transportant pas à pas la tôle de rayonnement (1) dans la direction transversale sur la pièce d'appui (6.2) de l'outil inférieur (6) en fonction de la distance souhaitée entre tuyaux.

12. Dispositif selon au moins l'une des revendications 4 à 11, **caractérisé en ce que** l'outil de presse est muni d'un dispositif d'alimentation qui transporte les tuyaux (2) en direction longitudinale dans les évidements (6.5) de la pièce d'appui (6.2).

13. Procédé selon l'une des revendications 1 à 3, **caractérisé en ce que** la tôle de rayonnement (1) et les tuyaux (2) sont en métal ou en plastique.

14. Procédé selon la revendication 13, **caractérisé en ce que** la tôle de rayonnement (1) est en aluminium et les tuyaux (2) sont en cuivre.

15. Procédé selon la revendication 13 ou la revendication 14, **caractérisé en ce que** la tôle de rayonnement (1) est perforée.

16. Procédé selon l'une des revendications 13 à 15, **caractérisé en ce que** la tôle de rayonnement (1) est munie de profilés de renfort (3) qui s'étendent transversalement aux tuyaux (2) entre des parties latérales placées de chant (1a).

17. Procédé selon Tune des revendications 13 à 16, **caractérisé en ce que** le dessus de la plaque rayonnante de plafond est muni d'un tapis isolant (4).
